Europäisches Patentamt

European Patent Office

Office européen des brevets

(19)

(11) **EP 1 291 067 A2**

(12) **EUROPEAN PATENT APPLICATION**

(43) Date of publication:
**12.03.2003 Bulletin 2003/11**

(51) Int Cl.⁷: **B01D 53/04**

(21) Application number: **02255859.7**

(22) Date of filing: **22.08.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **27.08.2001 US 939876**

(71) Applicant: **AIR PRODUCTS AND CHEMICALS,
INC.
Allentown, PA 18195-1501 (US)**

(72) Inventor: **Sircar, Shivaji
Wescosville, PA 18106 (US)**

(74) Representative: **Smart, Peter John
W.H. BECK, GREENER & CO
7 Stone Buildings
Lincoln's Inn
London WC2A 3SZ (GB)**

(54) **Rapid thermal swing adsorption**

(57)    Temperature swing adsorption of contaminants such as water and air from a gas stream such as air is conducted using adsorbent packed in tube side passages of a tube and shell heat exchanger adsorber. After a period of adsorption heating fluid is passed through the shell side passage of the adsorber during regeneration and upon exiting from the adsorber is recycled via a heater back into the shell side of the adsorber. During a cooling phase of the regeneration, a cooling fluid is passed through the shell side passage of the adsorber.

FIG. 1

EP 1 291 067 A2

**Description**

The present invention relates to a rapid temperature swing adsorption process for the removal of impurities such as carbon dioxide, water, nitrogen oxides and hydrocarbons from a gas such as air.

In conventional processes for cryogenic separation of air to recover nitrogen and/or oxygen, feed air is compressed, then cooled through expansion to low temperature before introduction to a two-stage distillation column. Unless water and carbon dioxide are removed from the air before cooling, these components will condense and block heat exchangers employed for cooling the gas prior to distillation. Also, other air impurities can cause both freeze-out and safety problems. For example, nitrogen oxides including nitrogen monoxide and nitrogen dioxide can form polymeric species $N_2O_4$ and $N_2O_5$ during reaction with oxygen from air. These higher nitrogen oxides freeze at temperatures which are present in the main heat exchanger. Consequently, these impurities must also be removed prior to the cold box. In addition, hydrocarbon impurities, especially acetylene, present in the feed air can cause explosion hazards if they enter the cold box. If acetylene enters the cold box it concentrates in the liquid oxygen section of the distillation column creating a severe safety problem. Thus, in addition to the removal of water and carbon dioxide, other air impurities including nitrogen oxides and acetylene must be removed prior to the cold box.

There is also significant interest in the removal of trace carbon dioxide and water from synthesis gas prior to cryogenic separation of carbon monoxide and hydrogen. Typically carbon monoxide and hydrogen are produced by steam reforming methane to produce synthesis gas containing carbon monoxide, hydrogen, carbon dioxide, water and methane. The bulk of the carbon dioxide is then removed in an absorption unit. The trace levels of carbon dioxide and water which exit the scrubber must then be removed to low levels before introduction into the cryogenic distillation process.

Two methods generally used for such impurity removal are temperature swing adsorption (TSA) and pressure swing adsorption (PSA).

In each of these techniques, a bed of adsorbent is exposed to flow of feed air for a period to adsorb impurities such as carbon dioxide and water from the air. The concentration of the removed component in the adsorbent will gradually rise. The concentration of the removed component will not be uniform but will be highest at the upstream end of the adsorbent bed and will tail off progressively through a mass transfer zone in the adsorbent. If the process is conducted indefinitely, the mass transfer zone will progressively move downstream in the adsorbent bed until the component which is to be removed breaks through from the downstream end of the bed. Before this occurs, it is necessary to regenerate the adsorbent.

To regenerate the adsorbent, the flow of feed air is shut off from the adsorbent bed and the adsorbent is exposed to a flow of purge gas (typically product gas) which strips the adsorbed component from the adsorbent and regenerates it for further use. In TSA, the heat needed to desorb the component from the adsorbent in the regeneration phase is supplied by heated purge gas, typically at a temperature of 100 to 250 °C. The adsorbent is subsequently cooled by a flow of cooled impurity-free gas. In PSA, the pressure of the purge gas is typically lower than that of the feed gas and the purge gas has a low partial pressure of the adsorbed component(s). The change in partial pressure is used to remove the component from the adsorbent, with the heat required for desorption being supplied by heat of adsorption retained within the bed or the sensible heat of the adsorbent.

TSA and PSA techniques can also be applied to feed gases other than air or to air to be purified for purposes other than use in an air separation plant.

In the conventional TSA process described above, heating and cooling of the adsorbent for regeneration is achieved by passing a hot/cold gas directly over the adsorbent. The minimum total cycle time for this type of process is normally 2 to 8 hours, and a typical cycle time is 4 to 16 hours. This is a result of the relatively low heat capacity of the gases used, the fact that high gas flow rates cannot be used because of pressure drop penalty, and the fact that using high gas temperatures is energy intensive and therefore expensive.

The adsorbers must include enough adsorbent to contain the impurities for the entire length of the adsorption step (typically a minimum of 1 to 4 hours). For large-scale gas purification, this limitation makes very large adsorbers and heating systems necessary.

A further drawback of the conventional TSA process is the relatively large amount of product gas, typically 10 to 35 %, needed for adsorbent regeneration, reducing the yield of product gas.

Numerous attempts have been made to improve the TSA process, for example using a pulse of heated gas, using heat of compression of feed gas to partially supply the heat of regeneration, using multi-bed systems to recover and reuse the heat of regeneration, using relatively low temperature regeneration (for example 80 to 135 °C), eliminating the cooling step, and using an auxiliary adsorber to purify exhaust purge gas. The methods aim to decrease the energy consumption and thus the cost of the TSA process, and/or to improve the separation efficiency by reducing the adsorbent inventory and/or increasing the product recovery. However, all of these methods involve heating and cooling of the adsorbent using purge gas, and thus the total cycle time for the process remains in the order of hours.

Various other methods of supplying heat to the adsorbent for regeneration have been proposed. These include microwave energy (US-A-4312641), installation of electrical heaters inside the packed adsorbent bed of the adsorber (US-A-4269611) and direct application of electric current to the adsorber for electrodesorption (US-A-4094652).

US-A-5669962 discloses a pressure swing/thermal swing adsorption dryer using shell and tube type adsorber heat exchangers wherein the internal tube surface is coated with fine water adsorbent particles. The adsorbent is indirectly heated or cooled by flowing hot or cold feed gas to the separation process through the shell side passage of the heat exchanger. The feed gas acts first as a cold shell side gas in a first absorber heat exchanger, then is heated to act as a hot shell side gas in a second absorber heat exchanger undergoing regeneration, and then passes through the tube side of the first absorber heat exchanger where it is dried. Part of the dried gas is used as a purge gas for the tube side of the second absorber heat exchanger. The cycle is periodically reversed by interchanging the functions of the two adsorber heat exchangers. The interchange may take place at intervals of from thirty seconds to three minutes.

The heat available for supply to regeneration as taught in the US-A-5669962 process is dependent on the mass flow rate of the feed gas, as the heat derives from the MAC (main air compressor) and the system lacks flexibility and is unsuited to large scale applications. Thus, this process is not applicable to the present invention.

In a first aspect, the present invention provides a thermal swing adsorption process for removing a component from a feed gas, comprising the steps of:

a) passing the feed gas in a first direction in contact with an adsorbent to adsorb the component from the feed gas on the adsorbent;
b) heating the adsorbent and passing a first regenerating gas in a second direction opposite to the first direction in contact with the adsorbent to desorb the feed gas component from the adsorbent;
c) cooling the adsorbent; and
d) repeating the cycle of steps a) to c),

wherein the adsorbent is heated by passing a heating fluid which is separated from the adsorbent but is able to exchange heat with the adsorbent, such that the amount of heat supplied to the adsorbent by the heating fluid is independent of the amount of feed and regeneration gas passed.

Preferred temperatures for the heating fluid as it enters the adsorber heat exchanger are from 100°C to 250°C, e.g. 200°C.

Preferably, the adsorbent is cooled in step c) by passing a cooling fluid which is separated from the adsorbent but is able to exchange heat with the adsorbent, such that the amount of heat removed from the adsorbent by the cooling fluid is independent of the amount of feed and regeneration gas passed. The flow of heating fluid and/or that of cooling fluid may be counter-current to the flow of gas in the tube side of the adsorber heat exchanger.

Preferably, at least one of the heating fluid and the cooling fluid is different from the feed gas.

Optionally, at least one of the heating fluid and the cooling fluid is different from the regenerating gas.

Preferably, the process further comprises passing a second regenerating gas in the second direction in contact with the adsorbent during cooling.

The first regenerating gas and the second regenerating gas may be identical. In this case, the regenerating gas is preferably product gas produced from the feed gas by step a). Alternatively, the two regenerating gases may be different. In this case, the first regenerating gas is preferably derived from the second regenerating gas, being the effluent second regenerating gas from step c), and the second regenerating gas is preferably product gas produced from the feed gas by step a).

The first regenerating gas is preferably pre-heated to a desired temperature. This temperature may be the temperature of the heating fluid.

Preferably, the heating fluid is recycled. The heating fluid may be reheated in between cycles. The heating fluid and may be recycled using a pump. Preferably, the cooling fluid is not recycled.

Preferably, the process takes place in one or more adsorbers, each adsorber comprising one or more tubes, and a shell surrounding the tube or tubes and separated from the tube or tubes by one or more heat-exchanging surfaces. More preferably, each tube contains adsorbent particles. Highly preferably, each tube contains a packed bed of adsorbent. In using the term "tube or tubes", it is understood that each tube may or may not contain fins internal or external to the tube.

Preferably, the process takes place in three adsorbers, such that in each cycle step a) takes place in a first adsorber whilst step b) takes place in a second adsorber and steps c) takes place in a third adsorber, then step b) takes place in the first adsorber whilst step c) takes place in the second adsorber and step a) takes place in the third adsorber, then step c) takes place in the first adsorber whilst step a) takes place in the second adsorber and step b) takes place in the third adsorber.

Optionally, one or more of the heating fluid and the cooling fluid is a gas. Where the heating fluid is a gas, it may comprise feed gas and/or regenerating gas obtained as a product of step c). Part of either of these streams may be withdrawn for use for this purpose, and optionally may be wholly or partly recycled for multiple passes through the shell side of the adsorbers. One or more of the heating fluid and the cooling fluid may comprise steam and/or air.

Alternatively, one or more of the heating fluid and the cooling fluid may be a liquid. One or more of the heating fluid and the cooling fluid may comprise oil and/or water.

Preferably, a cycle of steps a) to c) is carried out in 30 minutes or less. More preferably, a cycle of steps a) to c) is carried out in fifteen minutes or less.

Preferably, the feed gas is air. The feed gas may alternatively be contaminated synthesis gas as discussed above.

Preferably, the component to be removed comprises carbon dioxide and/or water. Where alumina is used, it may be a modified alumina as described in US 5846295 or 5656064 which is hereby incorporated by reference.

Preferably, the adsorbent comprises alumina and/or zeolite.

In a second aspect, the present invention provides a thermal swing adsorption process for removing a component from a feed gas, comprising the steps of:

a) passing the feed gas in a first direction in contact with an adsorbent to adsorb the component from the feed gas on the adsorbent;
b) heating the adsorbent and passing a first regenerating gas in a second direction opposite to the first direction in contact with the adsorbent to desorb the feed gas component from the adsorbent;
c) cooling the adsorbent;
d) repeating the cycle of steps a) to c),

wherein the adsorbent is heated by passing a heating fluid which is separated from the adsorbent but is able to exchange heat with the adsorbent, the heating fluid being different from the feed gas.

In a third aspect, the present invention provides a thermal swing adsorption process for removing a component from a feed gas, comprising the steps of:

a) passing the feed gas in a first direction in contact with an adsorbent to adsorb the component from the feed gas on the adsorbent;
b) heating the adsorbent and passing a first regenerating gas in a second direction opposite to the first direction in contact with the adsorbent to desorb the feed gas component from the adsorbent;
c) cooling the adsorbent;
d) repeating the cycle of steps a) to c),

wherein the adsorbent is heated by passing a heating fluid which is separated from the adsorbent but is able to exchange heat with the adsorbent, the heating fluid being recycled.

In a fourth aspect, the present invention provides a thermal swing adsorption process for removing a component from a feed gas, comprising the steps of:

a) passing the feed gas in a first direction in contact with an adsorbent to adsorb the component from the feed gas on the adsorbent;
b) heating the adsorbent and passing a first regenerating gas in a second direction opposite to the first direction in contact with the adsorbent to desorb the feed gas component from the adsorbent;
c) cooling the adsorbent;
d) repeating the cycle of steps a) to c),

wherein the adsorbent is heated by passing a heating fluid which is separated from the adsorbent but is able to exchange heat with the adsorbent, the heating fluid being heated by a heater separate from the main air compressor.

In a fifth aspect, the present invention provides an adsorber for carrying out a thermal swing adsorption process, comprising one or more tubes (whether these tubes are with or without internal or external fins) each containing a packed bed of adsorbent, and a shell surrounding the tube or tubes and separated from the tube or tubes by one or more heat exchanging surfaces.

The invention further includes apparatus for use in a thermal swing adsorption process for removing a component of a feed gas, comprising at least one adsorber containing adsorbent particles, a source of compressed feed gas connected to drive feed gas over the adsorbent for the adsorption of said component therefrom on to the adsorbent, a source of a flow of regenerating gas for desorbing said component from the adsorbent, valved connections allowing the flow of feed gas over the adsorbent to be stopped and a counter-current flow of regenerating gas over the adsorbent to be established, a flow path for recirculation of heating fluid in indirect heat exchange relationship with said adsorbent, said flow path including a heater for heating said recirculating heating fluid and a pump for driving said recirculation, a flow path for cooling fluid in indirect heat exchange relationship with the adsorbent, and valved connections allowing the recirculation of heating fluid to be started and stopped and allowing flow of said cooling fluid to be started and stopped.

Preferably, said indirect heat exchange relationship is established between the adsorbent particles packed in tubes of a shell and tube heat exchanger and the said heating or cooling fluid flowing in a shell side passage of said heat exchanger.

Preferably, the apparatus comprises a plurality of said adsorbers and valved connections allowing one of said adsorbers to be being regenerated while another of said adsorbers is adsorbing said components from said feed gas, and allowing a continuous cycle of adsorption duty and regeneration to be established among the adsorbers.

The invention will be further described and illustrated with reference to the accompanying drawings, in which:

Figure 1 schematically illustrates apparatus for use according to a preferred embodiment of the invention.
Figure 2 schematically illustrates the cycle times used in connection with the apparatus of Figure 1.

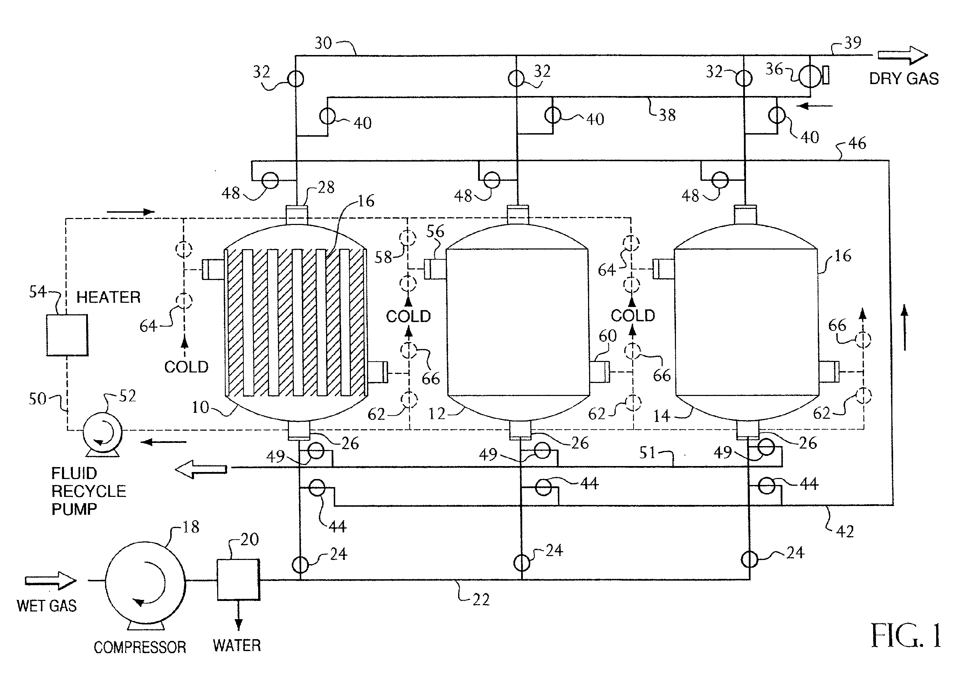

In a preferred embodiment of the invention, rapid TSA is carried out using the apparatus of Figure 1, comprising three parallel adsorbers 10,12,14. Each adsorber, for example, comprises a carbon steel shell and tube heat exchanger with nominal tube diameters of 3.0 inches (7.6 cm) (O.D. = 3.5" (8.9 cm), wall thickness = 0.216" (0.55 cm), weight = 7.58 lbs/ft (11.28 kg/m)). Each shell and tube adsorber comprises 805 tubes 16 about 3.0' (0.91 m) in length, giving a heat exchange area of about 2200 ft$^2$ (204 m$^2$). The tubes are each packed with a layer of activated alumina and a layer of NaX zeolite. This apparatus is suitable for removal of water and carbon dioxide from compressed air (90 psia (620.6 kPa), 90 °F (32°C)).

In other embodiments of the invention, the adsorbent may be of a single type. Where alumina is used as either the single adsorbent or in combination with other adsorbent such as zeolite, it may be a modified alumina as described in US 5656064. Thus, the adsorbent may be formed by impregnating alumina with a basic solution having a pH of 9 or more.

The beneficial effect of the treatment of the alumina with a basic solution may be due to the reaction of carbon dioxide with hydroxide ions in the basic environment of the alumina surface to form bicarbonate ions, although the applicant does not wish to be bound by this theory.

Preferably, the pH of the impregnating solution is at least 10, more preferably from 10 to 12. Best results have been obtained using an impregnating solution having a pH of about 11.

it is further preferred that the pH of the impregnating solution is related to the zero point charge (zpc) of the alumina according to the formula:

$$pH \geqq zpc\text{-}1.4$$

or more preferably by the formula:

$$zpc\text{+}2 \geqq pH \geqq zpc\text{-}1.4$$

Most preferably, the pH of the impregnating solution is related to the zero point charge of the alumina by the formula:

$$zpc\text{+}1 \geqq pH \geqq zpc\text{-}1$$

Said basic solution may suitably be a solution of an alkali metal or ammonium compound such as one selected from hydroxides, carbonates, bicarbonates, phosphates, and organic acid salts. Suitable basic compounds that may be employed include sodium, potassium or ammonium carbonate, hydroxide, phosphate bicarbonate, nitrate, formate, acetate, benzoate or citrate.

The most preferred basic compound is potassium carbonate.

The illustrated apparatus comprises a main air compressor 18 compressing feed air. Water is condensed out of the compressed feed air stream in a cooler 20 from which the compressed feed air passes to an inlet manifold 22. One of valves 24 passes feed air to the tube side inlet 26 of a first of the adsorbers (left-hand-most in the drawing)in which stage (a) of the process in ongoing. From the tube side outlet 28 of the adsorber, the purified air passes to an outlet manifold 30 via a valve 32 and so is led away as product gas at an outlet 34. A part of the product gas containing less than 10 ppm water and carbon dioxide is abstracted from the product stream at a pressure reduction valve 36 and is passed to a manifold 38 for passage via a valve 40 into the tube side outlet of the right-hand-most adsorber as regenerating gas for use in step (c) of the process.

The effluent regenerating gas from the adsorber, now containing some impurities gained from the adsorbent, exits from the tube side inlet 26 of the adsorber to a manifold 42 via a valve 44 and passes up to a manifold 46 from which it passes via a valve 48 through the tube side outlet 28 of the middle adsorber as a regenerating gas for use in step (b) of the process. Although not shown in Figure 1, this regenerating gas can be heated to the desired regeneration temperature before entering the adsorber. The spent regenerating gas exits via the outlet 26 and is fed to waste via a valve 49 feeding a manifold 51.

A heating fluid is circulated around a heating circuit 50 by a pump 52 feeding a heater 54 from which the fluid passes to the shell side inlet 56 of the middle adsorber via a valve 58 to supply the heat for step (b) of the process. The fluid exits via the shell side outlet 60 of the adsorber and passes back to the pump 52 via a valve 62. The direction of flow of the heating fluid can also be reverse of that shown in Figure 1.

A cooling fluid (suitably cold water) is introduced at the shell side inlet of the right hand adsorber via a valve 64 and is discharged to waste from the shell side outlet of the adsorber via valve 66. Again, the direction of the cooling fluid can be the reverse of that shown in Figure 1.

At the conclusion of the adsorbtion step in the left hand adsorber, each adsorber is moved on to the next step in the cycle.

Thus the compressed gas to be treated is passed through the packed tubes at near ambient temperature at a rate of 1 (0.0014) to 100 (0.14)lb moles/hr/ft$^2$ (Kg mol/sec/m$^2$) to produce an impurity-free product gas stream at feed pressure. The tubes are then depressurised counter-currently to near ambient pressure while heating them by counter-currently or co-currently flowing a heating fluid (gas or liquid) through the shell side of the adsorber. The heating step is continued until the feed-end of the adsorber tubes reach a pre-set temperature which is below the entrance temperature of the heating fluid. A small stream of the impurity-free product gas (or a gas from the cooling step described below containing a small amount of the impurities) is counter-currently passed at near ambient temperature through the tubes during the heating step in order to remove the desorbed impurities from inside the tubes. The gas may alternatively be pre-heated to the heating fluid temperature before entering the adsorber. The impurity-laden hot effluent gas is vented. The heating fluid leaving the shell side of the adsorber is reheated and recycled in a closed loop manner using a pump. After heating, the tubes are cooled by counter-currently flowing the cooling fluid (gas or liquid) through the shell side of the adsorber. A small portion of the product gas at near ambient temperature and pressure is passed counter-currently or co-currently through the tubes during the cooling step. After adequate cooling, the adsorber tubes are counter-currently pressurised to feed gas pressure using a portion of the clean product gas. The cooling fluid continues to flow through the shell side during the pressurisation step. The adsorber is now ready for a new cycle.

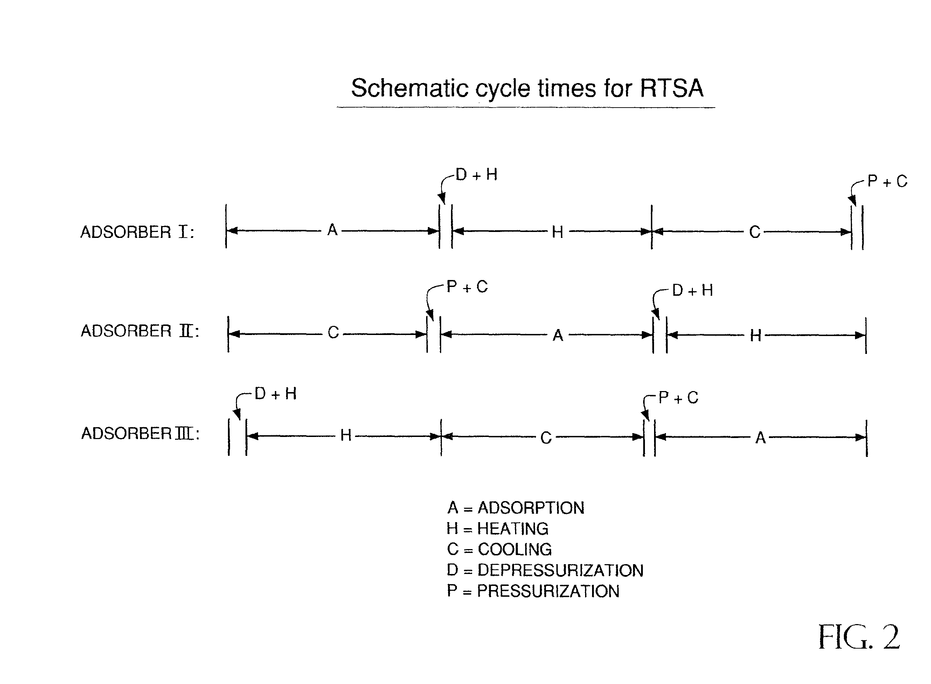

Using three parallel adsorbers and appropriate switch valves, one can operate the system with continuous feed gas introduction, continuous product gas withdrawal, and continuous heating fluid and cooling fluid flows. Figure 2 is an example of the cycle times of various steps of the process. Table 1 compares the cycle times of Figure 2 with those of a conventional TSA process.

| RAPID TSA | | CONVENTIONAL TSA | |
|---|---|---|---|
| Step | Time/mins (sec) | Step | Time/mins (sec) |
| Adsorption | 40.0 (2,400) | Adsorption | 360 (21,600) |
| Depressurisation/heating | 2.5 (150) | Depressurisation/heating | (900) |
| Heating | 37.5 (2,250) | Heating | 120 (7,200) |
| Cooling | 37.5 (2,250) | Cooling | 210 (7,200) |
| Pressurisation/cooling | 2.5 (150) | Pressurisation/cooling | 15 (900) |
| Total cycle time | 120 (7,200) | Total cycle time | 720 (43,200) |

This embodiment of the invention has several advantages over the conventional TSA process. The preferred embodiment of the invention has a short cycle time of five to sixty, (more perferrably, ten to thirty) minutes that is significantly shorter than that of a conventional TSA process. As discussed above, this allows the adsorbers to be significantly smaller in size than conventional adsorbers. For example, for a cryogenic oxygen production plant having a capacity between 200 and 300 tons per day (181,436 Kg to 272,154 Kg per day) using the adsorption process of the present invention, there would be approximately a five to ten fold reduction in the adsorbent inventory needed for the plant.

This embodiment of the invention shows a significant energy saving over the conventional TSA process.

Another advantage of this embodiment of the invention is that a very small fraction of product gas, typically 3 to 10 %, is needed for regeneration because this gas is not supplying heat to the adsorbent. This means that the product yield is increased compared with conventional TSA.

Compared with the systems disclosed in US-A-4312641, US-A-4269611 and US-A-4094652, this embodiment of the present invention has the advantage that the cooling step is accelerated as well as the heating step.

Compared with the system disclosed in US-A-5669962, this embodiment of the present invention is much simpler, not involving the complex passage of feed and product gas through the tube and shell sides. The heating fluid may be chosen for optimum heating properties rather than being limited to the feed gas. The cooling step is carried out before feed gas enters the regenerated bed, allowing optimum adsorption throughout the adsorption step. Additionally, in the preferred embodiment, the adsorbent is packed in beds in the tubes rather than being coated on the tube sides. The use of a simple packed bed eliminates channeling and costly production associated with structured or coated adsorbent concepts. This embodiment of the present invention removes carbon dioxide from the feed gas as well as moisture.

Whilst the invention has been described in detail in terms of a preferred embodiment thereof, it will be appreciated that many modifications and variations are possible within the scope of the invention. For instance, the effluent impurity laden gas from the tube side (step b and part of step c) can be further heated and used as part of the heating gas I the shell side by mixing it with the balance of the heating gas. Other options include the discharge without recirculation of the heating fluid, optionally with heat recovery therefrom, or the partial recirculation of the heating fluid, with a portion being replaced in each cycle. The heating fluid may in this instance particularly be feed gas or product gas and may be fed back into the feed gas or product gas stream on discharge.

In particular, it should be understood that although the process cycle of the present invention has been described in relationship to three parallel adsorber beds, it can also be practiced using at least two parallel adsorber beds by approximate rearrangement of the individual step cycle times shown in Figure 2.

It will further be understood that the invention is not restricted to the removal of impurities from air but is of general applicability.

**Claims**

1. A thermal swing adsorption process for removing a component from a feed gas, comprising the steps of:

   a) passing the feed gas in a first direction in contact with an adsorbent to adsorb the component from the feed gas on the adsorbent;
   b) heating the adsorbent and passing a first regenerating gas in a second direction opposite to the first direction in contact with the adsorbent to desorb the feed gas component from the adsorbent;
   c) cooling the adsorbent;
   d) repeating the cycle of steps a) to c),

   wherein the adsorbent is heated by passing a heating fluid which is separated from the adsorbent but is able to exchange heat with the adsorbent, such that the amount of heat supplied to the adsorbent by the heating fluid is independent of the amount of feed and regeneration gas passed.

2. A process as claimed in Claim 1, wherein the adsorbent is cooled by passing a cooling fluid which is separated from the adsorbent but is able to exchange heat with the adsorbent, such that the amount of heat removed from the adsorbent by the cooling fluid is independent of the amount of feed and regeneration gas passed.

3. A process as claimed in Claim 1, wherein at least one of the heating fluid and the cooling fluid is different from the feed gas.

4. A process as claimed in Claim 1, wherein at least one of the heating fluid and the cooling fluid is different from the first regenerating gas.

5. A process as claimed in Claim 1, further comprising passing a second regenerating gas in the second direction in contact with the adsorbent during cooling.

**6.** A process as claimed in Claim 4, wherein the first regenerating gas and the second regenerating gas are identical.

**7.** A process as claimed in Claim 1, wherein the first regenerating gas is pre-heated to a desired temperature.

**8.** A process as claimed in Claim 1, wherein the heating fluid is recycled.

**9.** A process as claimed in Claim 1, wherein prior to or during step (b), the pressure of the gas over the adsorbent is reduced in a depressurisation step.

**10.** A process as claimed in Claim 9, wherein prior to or during the repetition of step (a), the pressure of the gas over the absorbent is increased in a repressurisation step.

**11.** A process as claimed in Claim 10, wherein said repressurisation is carried out by introducing product gas over the adsorbent.

**12.** A process as claimed in Claim 1, which process takes place in one or more adsorbers, each adsorber comprising one or more tubes, and a shell surrounding the tube or tubes and separated from the tube or tubes by one or more heat-exchanging surfaces.

**13.** A process as claimed in Claim 12, wherein each tube contains adsorbent.

**14.** A process as claimed in Claim 13, wherein each tube contains a packed bed of adsorbent.

**15.** A process as claimed in Claim 12, which process takes place in three adsorbers, such that in each cycle step a) takes place in a first adsorber whilst step b) takes place in a second adsorber and step c) takes place in a third adsorber, then step b) takes place in the first adsorber whilst step c) takes place in the second adsorber and step a) takes place in the third adsorber, then step c) takes place in the first adsorber whilst step a) takes place in the second adsorber and step b) takes place in the third adsorber.

**16.** A process as claimed in Claim 1, wherein one or more of the heating fluid and the cooling fluid is a gas.

**17.** A process as claimed in Claim 16, wherein the heating fluid comprises feed gas and/or regenerating gas obtained as a product of step c).

**18.** A process as claimed in Claim 16, wherein one or more of the heating fluid and the cooling fluid comprises steam and/or air.

**19.** A process as claimed in Claim 1, wherein one or more of the heating fluid and the cooling fluid is a liquid.

**20.** A process as claimed in Claim 19, wherein one or more of the heating fluid and the cooling fluid comprises oil and/or water.

**21.** A process as claimed in Claim 1, wherein a cycle of steps a) to c) is carried out in 30 minutes or less.

**22.** A process as claimed in Claim 21, wherein a cycle of steps a) to c) is carried out in fifteen minutes or less.

**23.** A process as claimed in Claim 1, wherein the feed gas is air.

**24.** A process as claimed in Claim 1, wherein the component to be removed comprises carbon dioxide and/or water.

**25.** A process as claimed in Claim 1, wherein the adsorbent comprises alumina and/or zeolite.

**26.** A thermal swing adsorption process for removing a component from a feed gas, comprising the steps of:

    a) passing the feed gas in a first direction in contact with an adsorbent to adsorb the component from the feed gas on the adsorbent;
    b) heating the adsorbent and passing a first regenerating gas in a second direction opposite to the first direction in contact with the adsorbent to desorb the feed gas component from the adsorbent;

c) cooling the adsorbent;
d) repeating the cycle of steps a) to c),

wherein the adsorbent is heated by passing a heating fluid which is separated from the adsorbent but is able to exchange heat with the adsorbent, the heating fluid being different from the feed gas.

27. A thermal swing adsorption process for removing a component from a feed gas, comprising the steps of:

e) passing the feed gas in a first direction in contact with an adsorbent to adsorb the component from the feed gas on the adsorbent;
f) heating the adsorbent and passing a first regenerating gas in a second direction opposite to the first direction in contact with the adsorbent to desorb the feed gas component from the adsorbent;
g) cooling the adsorbent;
h) repeating the cycle of steps a) to c),

wherein the adsorbent is heated by passing a heating fluid which is separated from the adsorbent but is able to exchange heat with the adsorbent, the heating fluid being recycled.

28. A thermal swing adsorption process for removing a component from a feed gas, comprising the steps of:

e) passing the feed gas in a first direction in contact with an adsorbent to adsorb the component from the feed gas on the adsorbent;
f) heating the adsorbent and passing a first regenerating gas in a second direction opposite to the first direction in contact with the adsorbent to desorb the feed gas component from the adsorbent;
g) cooling the adsorbent;
h) repeating the cycle of steps a) to c),

wherein the adsorbent is heated by passing a heating fluid which is separated from the adsorbent but is able to exchange heat with the adsorbent, the heating fluid being heated by a heater separate from the main air compressor.

29. An adsorber for carrying out a thermal swing adsorption process, comprising one or more tubes each containing a packed bed of adsorbent, and a shell surrounding the tube or tubes and separated from the tube or tubes by one or more heat exchanging surfaces.

30. Apparatus for use in a thermal swing absorption process for removing a component of a feed gas, comprising at least one absorber containing absorbent particles, a source of compressed feed gas connected to drive feed gas over the adsorbent for the adsorption of said component therefrom on to the adsorbent, a source of a flow of regenerating gas for desorbing said component from the adsorbent, valved connections allowing the flow of feed gas over the adsorbent to be stopped and a counter-current flow of regenerating gas over the adsorbent to be established, a flow path for recirculation of heating fluid in indirect heat exchange relationship with said adsorbent, said flow path including a heater for heating said recirculating heating fluid and a pump for driving said recirculation, a flow path for cooling fluid in indirect heat exchange relationship with the adsorbent, and valved connections allowing the recirculation of heating fluid to be started and stopped and allowing flow of said cooling fluid to be started and stopped.

31. Apparatus as claimed in Claim 30, wherein said indirect heat exchange relationship is established between the adsorbent particles packed in tubes of a shell and tube heat exchanger and the said heating or cooling fluid flowing in a shell side passage of said heat exchanger.

32. Apparatus as claimed in Claim 30, comprising a plurality of said adsorbers and valved connections allowing one of said adsorbers to be being regenerated while another of said adsorbers is adsorbing said component from said feed gas, and allowing a continuous cycle of adsorption duty and regeneration to be established among the asborbers.

FIG. 1

## Schematic cycle times for RTSA

ADSORBER I: A — D+H — H — C — P+C

ADSORBER II: C — P+C — A — D+H — H

ADSORBER III: D+H — H — C — P+C — A

A = ADSORPTION
H = HEATING
C = COOLING
D = DEPRESSURIZATION
P = PRESSURIZATION

FIG. 2

EP 1 291 067 A2